# EUROPEAN PATENT SPECIFICATION

(11) **EP 1 180 814 B1**
(45) Date of publication and mention of the grant of the patent: **09.06.2004**
(21) Application number: 01117321.8
(22) Date of filing: 18.07.2001
(51) Int. Cl.: H01Q 1/22, H01Q 1/08, H04B 1/38

(54) **A plug-in card with retractable antenna for electronic portable devices**
Steckkarte mit ausziehbarer Antenne für tragbare elektronische Geräte
Carte enfichable à antenne rétractable pour équipement électronique portable

(30) Priority: 05.08.2000 DE 10038287
(43) Date of publication of application: 20.02.2002
(73) Proprietor: ITT MANUFACTURING ENTERPRISES, INC., Wilmington, Delaware 19801 (US)
(72) Inventor: Schremmer, Andreas, 73663 Berglen (DE); Geiselmann, Gerhard, 73732 Esslingen (DE); Centofante, Charles Alfred, Los Altos, CA 94024 (US)
(74) Representative: Fuhlendorf, Jörn, Dipl.-Ing.

(56) References cited:
- EP-A- 0 967 563
- US-A- 5 918 163
- US-A- 6 062 887
- US-A1- 2001 036 757

## Description

The present invention relates to a plug-in card for electronic devices according to the preamble of Claim 1.

Plug-in cards of this kind are used, for example, as PC cards conforming to the standards of the "Personal Computer Memory Card Industry Association" (PCMCIA) in portable computers (laptops, notebooks and the like) in which identification of the user by means of a chip card, for example a SIM card, is required for use of or access to a service. Such services may include credit cards, online services, or mobile telephone networks.

A plug-in card for electronic devices according to the preamble of claim 1 is known from EP 0 967 563 A2. This known plug-in card having a SIM card reader at the lengthwise side of its main portion comprises an antenna insert in a thicker extending part of it. This standing part of the plug-in card is fixedly connected with the main part of the plug-in card.

US 5 918 163 A discloses a plug-in electronic card assembly to be inserted into a slot of a laptop computer comprising an antenna being retractable between an extended position and a retracted position. However, presents and/or position of a chip card, such as a SIM card, is not disclosed.

A problem addressed by the present invention is to provide a plug-in card for electronic devices of the kind referred to above, which enables the user of a portable computer to handle the chip card as well as the antenna element at the plug-in card more easily.

In order to solve this problem, the features specified in Claim 1 are provided in a plug-in card for electronic devices.

A solution is achieved according to the invention such that on one hand, the portable computer becomes capable of external communication by means of a directly associated antenna and on the other hand, an antenna of this kind is provided in an easy to use and economical manner, whilst being easy to access and to keep safe in order to avoid damage to the antenna when not in use. The invention also provides that no intrinsic or separate insertion mechanism is required for the chip card. Moreover, a complex ejection mechanism, such as is otherwise used for drawer-type SIM-card holders, is not required because the antenna must be drawn out of the plug-in card enclosure in any case.

The features of Claim 2 provide a simple form of receiver for the chip card.

According to Claim 3, the available space inside the plug-in card does not remain unused when the antenna is inserted.

The features of Claim 4 and/or 5 provide that where the electronic device, for example a portable computer, is being used internally, there is no risk of unintentional transmission to the outside. Moreover, it is also unnecessary to have contact between the SIM-card and the inserted antenna, because in this position communication to outside is impossible.

The invention may include a retractable housing for a chip card and antenna, and the insertion and withdrawal of the housing may be effected in different ways. For example it may be grasped by the hand or pushed out with a pointed object in order to withdraw it. It is also possible, however, to provide the feature according to Claim 6 for easy actuation by way of a pushbutton key.

Further details of the invention will be understood from the following description, in which the invention is described and explained in more detail with reference to the embodiments described by way of example in the accompanying drawing, in which:
- Figures 1A, 1B and 1C: are schematic perspective representations, broken away and also partially broken open of a plug-in card having a rod-shaped antenna in a retracted safekeeping position or operating position respectively as a first example,
- Figures 2A and 2B: are representations corresponding to Figs. 1A and 1C, neither broken away nor broken open however, accordina to a second example,
- Figures 3A and 3B: are representations corresponding to Figs. 2A and 2B, showing a third example,
- Figures 4A to 4C: are schematic perspective top views of a plug-in card provided both with an antenna and with a chip-card receiver, in different positions of the antenna/chip-card housing, according to a first embodiment of the present invention given by way of example, and
- Figures 5A and 5B: are schematic partially broken away perspective views from underneath of the plug-in card according to Figs. 4B and 4C.

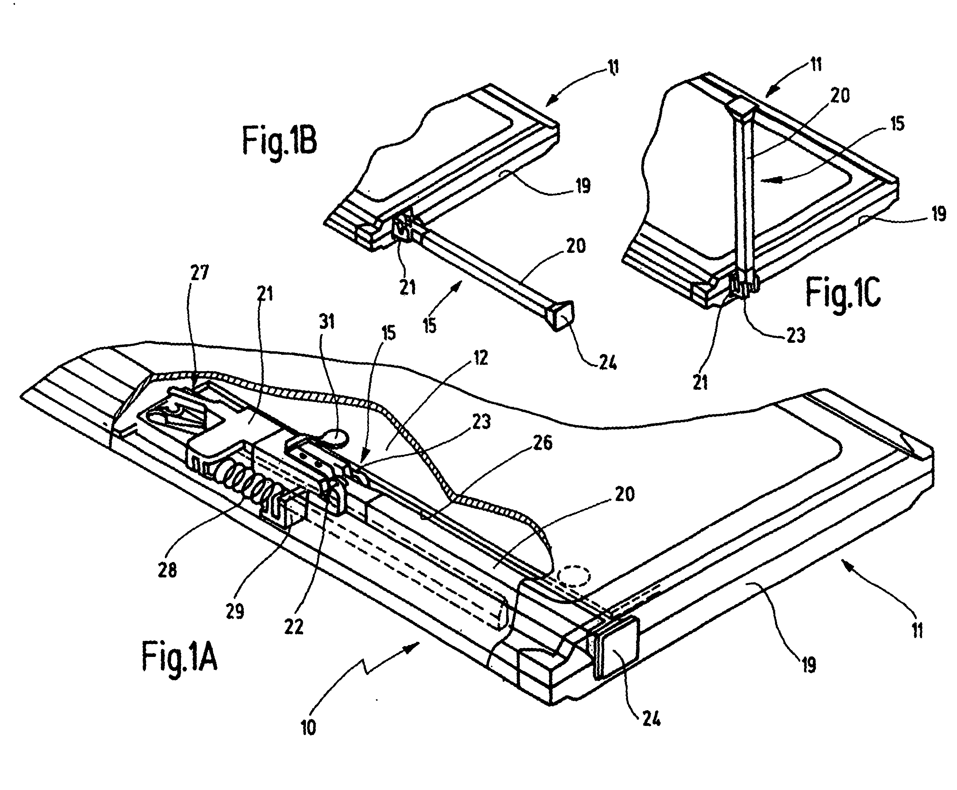

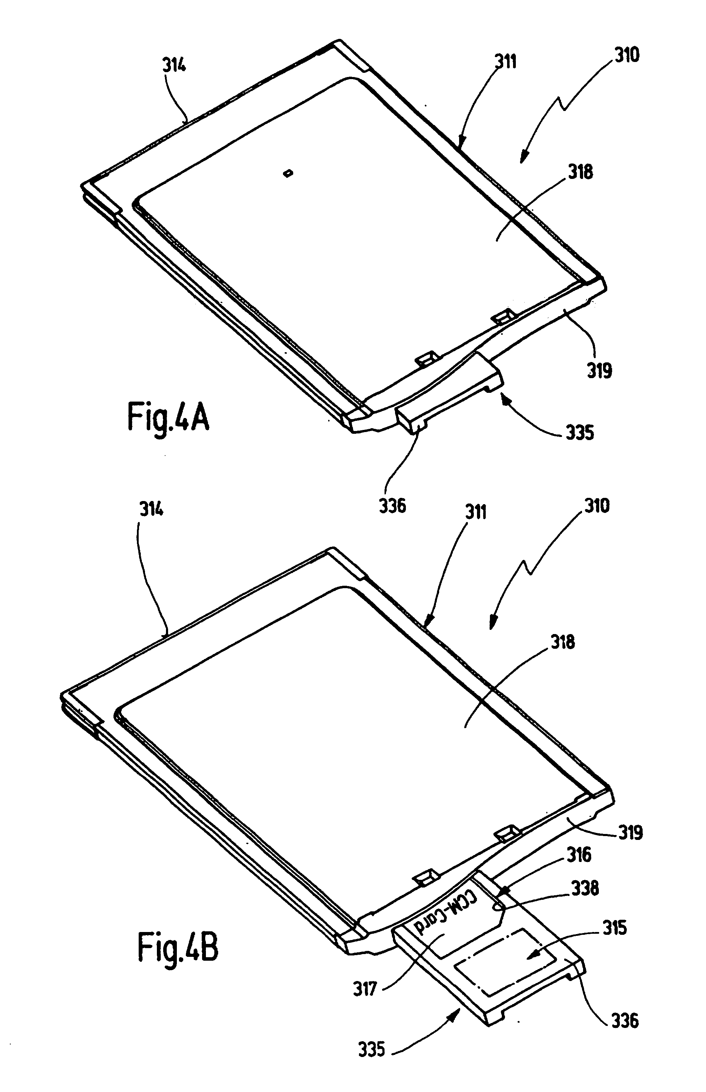

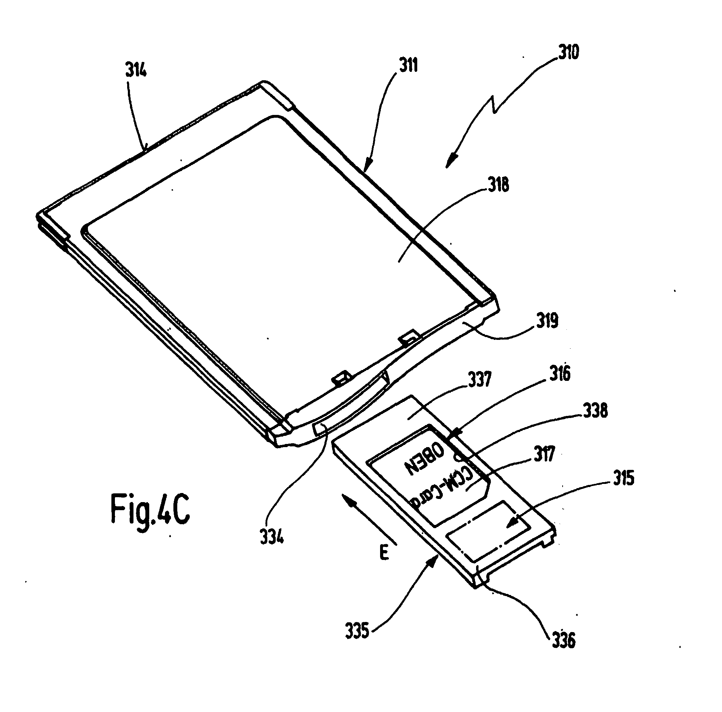

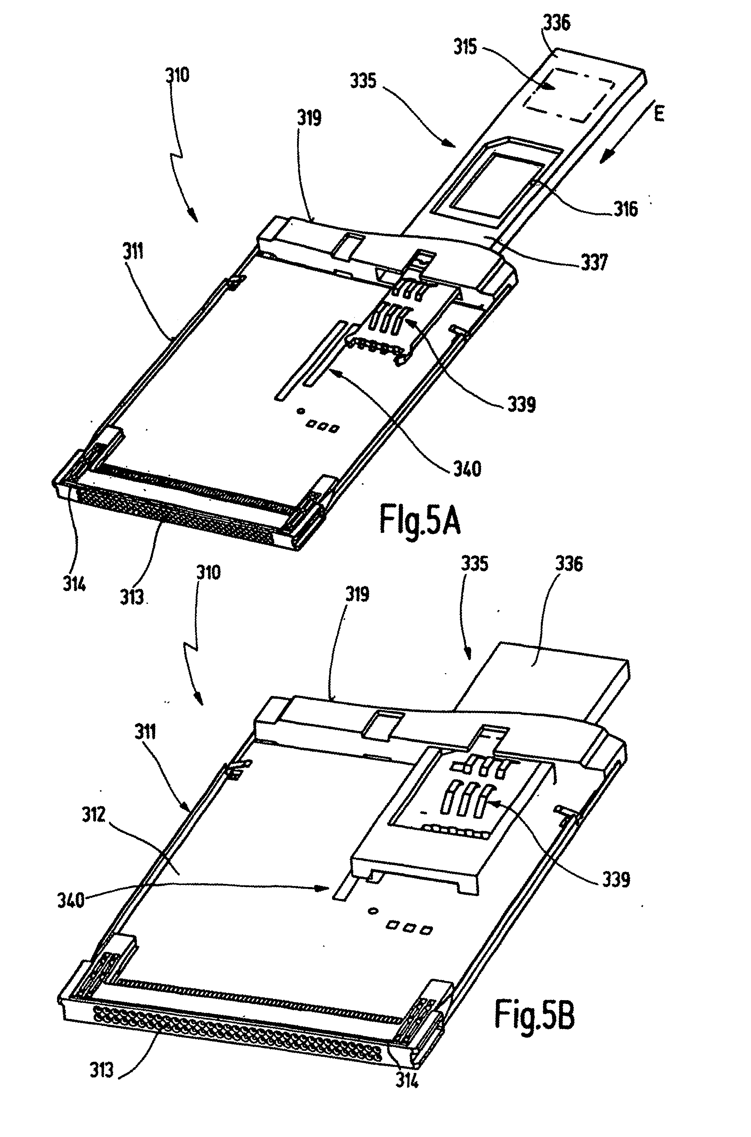

The plug-in card 10, 110, 210 of figures 1 to 3 shows examples useful for understanding the invention of figures 4 and 5.

The plug-in card 10, 110, 210 and 310 represented in the drawing is suitable for use with electronic devices, and has an oblong rectangular and very flat, preferably frameless enclosure 11, 111, 211 or 311. The enclosure 11, 111, 211 or 311 is formed, in a manner not shown in detail, of a bottom metallic enclosure portion and a top metallic enclosure portion which is connectable or connected by latching to the longitudinal edge face of the bottom portion. A partially.shown unit is arranged and mounted to be fixed between the bottom and top enclosure portions, the unit having a printed circuit board 12, 312 fitted with electronic components and a plug-in connector 313 connected to the printed circuit board, arranged on at least one narrow side 14, 114, 214, 314 of the enclosure 11, 111, 211, 311. In addition, the plug-in card 310 has a partially shown device 316 for receiving a chip card 317, for example a SIM card, used for plug-in cards 310 constructed as PC cards conforming to the standards of the Personal Computer Memory Card Industry Association (PCMCIA) in portable computers (laptops, notebooks and the like). In addition, the plug-in card 10, 110, 210, 310 is fitted with an antenna 15, 115, 215 or 315, for example a mobile radio antenna, which can be extended out of a safekeeping position in or on the enclosure 11, 111, 210, 310 of the plug-in card 10, 110, 210, 310 into an operating position, and vice versa. In the operating position, the antenna 15, 115, 215, 315 is located to a substantial extent outside of the enclosure 11, 111, 211, 311.

It is to be understood that the enclosure 311 may also be constructed in a different manner. For example, it may also be provided with a frame.

In the example in Fig. 1, the plug-in card 10 is provided with a rod-shaped antenna 15 on its other narrow.side 19 opposite to the narrow side having the plug-in connector (not shown). This rod-shaped antenna 15 can be retracted (into the narrow side 19 to reach the safekeeping position) or extended therefrom into one of two operating positions by moving it respectively into and out of a recess 26 extending in the longitudinal direction of the plug-in card 10. The rod-shaped antenna has a foot 21 to which a rod 20 is connected. Preferably, the end of the rod 20 which faces the foot 21 has laterally projecting pins 22 for receiving the rod to latch it into the end of the foot 21, the said end being constructed in a U-shape and being provided with latching grooves. The rod 20 can thus be moved out of a position disposed in one axis with the foot 21, into a position pivoted about 90° in relation to the foot 21 (Fig. 1C).

According to Fig. 1A, the antenna 15 can be housed substantially within recess 26 of the enclosure 11. In this safekeeping position, the antenna 15 is held within the recess 26. By means of pressure exerted on the free end 24 of the rod 20 of the antenna 15, a holding device is released and the rod 20 is brought so far out of the recess 26 that the free end 24 may be grasped, and the antenna 15 may be pulled out as shown in Fig. 1B so that the linking region of pins 22 and groove 23 of the rod 20 or respectively of the foot 21 is disposed outside of the enclosure 11. It is then possible to leave the rod 20 in the operating position according to Fig. 1B, or to move it into the operating position pivoted about 90° shown in Fig. 1C. The holding and releasing of the antenna 15 inside the recess 26 of the enclosure 11 is effected with the aid of a connecting-link mechanism 27 which is not shown in detail, as known for ball point pen cartridges for example, and of a tension spring 28 between the foot 21 and a slide 29. It is to be understood that known mechanisms may be used for holding the antenna in its inserted position and for releasing the holding device by brief pressure applied to the rod 20.

As can further be seen in Fig. 1A, the antenna is provided with an electrical connection pad 31 which, in its extended first or second operating position, comes into connection with a counter-contact on the printed circuit board 12. In the retracted safekeeping position, there is no electrical contact connection between the relevant region of the printed circuit board 12 and the antenna 15, so that the latter is disconnected.

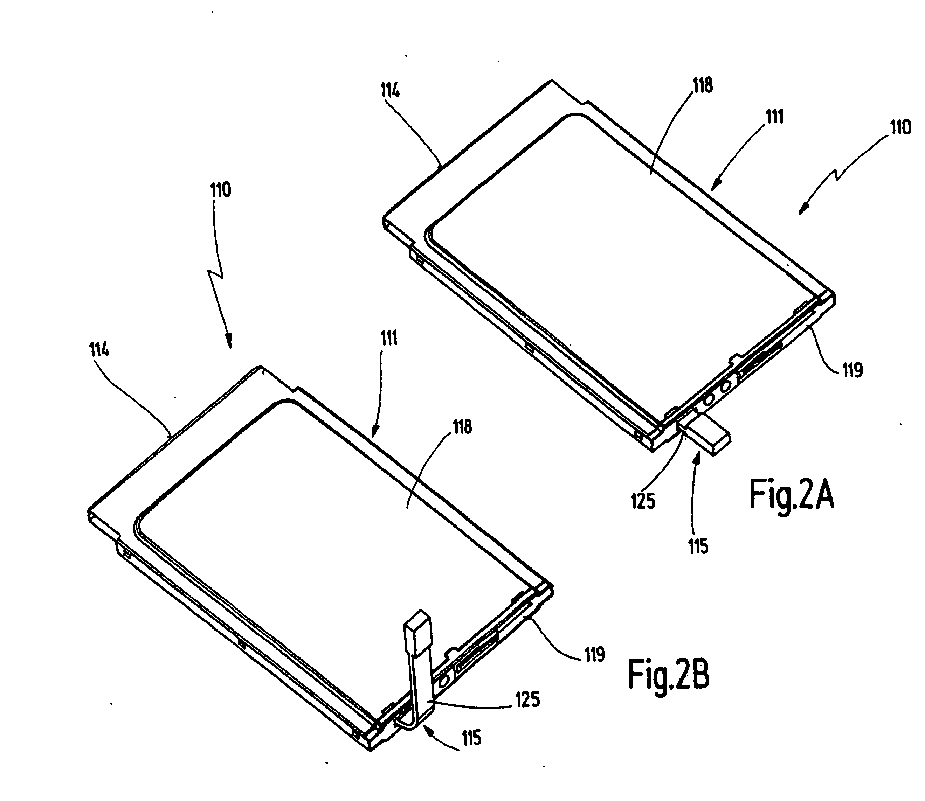

In the example of Figs. 2A and 2B, the antenna 115 is constructed in the form of a longitudinally extending flexible bar 125, which is arranged parallel to the longitudinal extent of the enclosure 111, similar to the antenna 15 of Fig. 1, and is axially retractable into and extendable out of the narrow side 119 of the enclosure 111. Fig. 2A shows the retracted safekeeping position, in which the free end of the antenna bar 125 projects beyond the narrow side 119 of the enclosure 111 in order to enable it to be grasped.

Fig. 2B shows the operating position of the bar-shaped antenna 115. For this purpose, the antenna bar 125 is extended or withdrawn in its axial direction from the position represented in Fig. 2A out of the enclosure 111 up to a limit stop, upon which according to Fig. 2B it automatically bends flexibly or is bent by hand into a position approximately perpendicular to the surface 118 of the enclosure 111. The return into the safekeeping position is effected in the reverse manner. For example, the antenna bar has two predetermined positions in the bending region 133, namely the straight extended position and the position bent at an angle of for example 90°, which may readily be assumed by pressing on the free end.

In a manner which is not shown, the antenna bar 125 may be held in its extended operating position and returned to its retracted safekeeping position by means of a roller-biased, or a spring-biased snap-type catch. It is to be understood that the antenna bar 125 may also be inserted even further into the enclosure 111 in the safekeeping position, in such a way that it can be extended with the aid of a pointed object, or according to the embodiment in Fig. 1, be expelled by brief contact pressure.

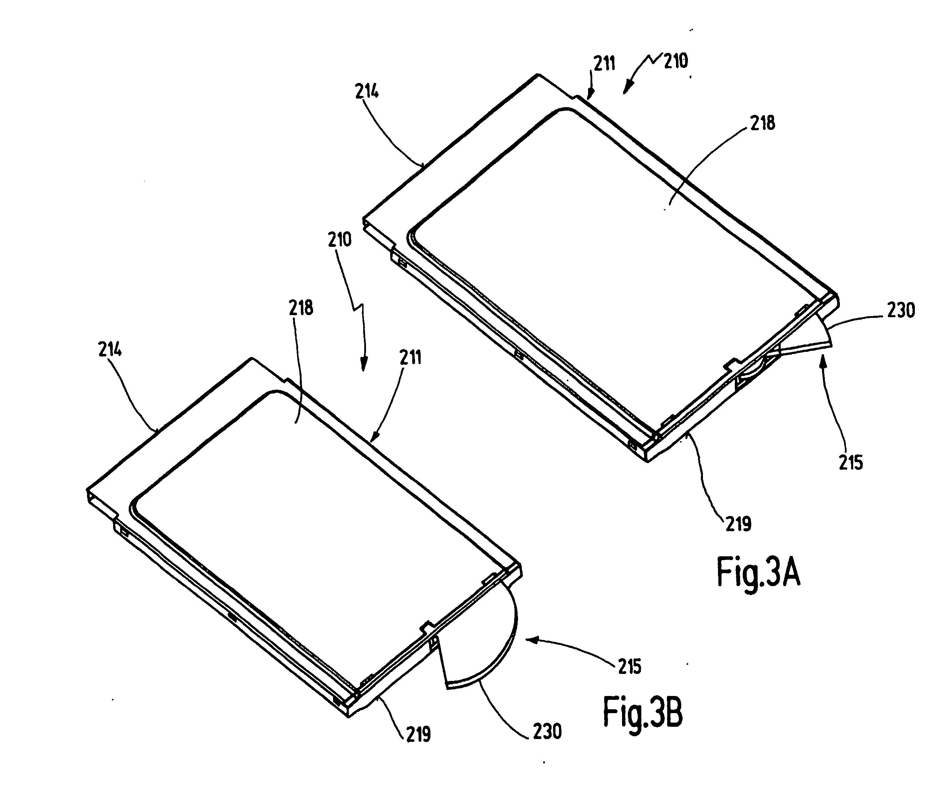

The antenna 215 shown in Figs. 3A and 3B is constructed in the manner of a sector-shaped disc 230, or so-called patch antenna. In a manner not shown in detail, this disc 230 has a centre point axis about which it can be pivoted out of the enclosure 211, beyond the narrow side 219, from the retracted safekeeping position represented in Fig. 3A into its extended or operating position shown in Fig. 3B, and can be pivoted back in the reverse manner. According to Fig. 3A, the disc 230 may be arranged in the safekeeping position such that it may be grasped by hand, or the disc may be pivoted out by means of a pointed object. Spring-biased pivoting after release of a holding device is also possible, corresponding to the examples of Fig. 1.

While in the plug-in card 10, 110, 210 according to the examples in Figs. 1 to 3, the receiver for a chip card (such as a SIM card) is provided on the enclosure 11, 111 or 211 in a manner not shown in detail, either on the surface or on the longitudinal edge, the embodiment represented by way of example in Figs. 4 and 5 provides a housing 335 which can be pushed into and pulled out of a recess 334 of the enclosure 311 of the plug-in card 310, which housing has both an antenna 315 which is not shown in detail, and a receiver 316 for a chip card 317, for example a SIM card.

According to Fig. 4C or 5A, the housing 335 has an antenna 315, indicated by dots and dashes, at its rear end 336 in the direction of insertion E and at its front region 337 in the direction of insertion, it has the pocket-shaped receiver 316 for the chip card 317. In this connection, the receiver 316 is a frame-shaped recess 338 provided in housing 335, into which recess the chip card 317 merely needs to be placed. As is evident from Fig. 5A and 5B, the printed circuit board 312 is provided with a contacting device 339 for the chip card 317 and with a contacting device 341 for the antenna 315.

Fig. 4A shows the retracted safekeeping position, in which the housing 335 fitted with the chip card 317 in the chip card receiver 316 and with the antenna 315 is pushed into the enclosure 311 of the plug-in card 310. In this safekeeping position, there is no contact either between the contacting device 339 and the chip card 317, or between the contacting device 341 and the antenna 315. It is to be understood that, in contrast to the arrangement shown in Fig. 4A according to which the housing 335 may be grasped by hand, provision may be made for extending it outwardly with the aid of a pointed tool in order, for example, to achieve a safekeeping position of the housing 335 which is flush with the narrow side 319 of the enclosure 311.

The operating position is represented in Figs. 4B and 5B, which shows the antenna 315 projecting in a suitable functional manner out of the enclosure 311 of the plug-in card 310, and in which the chip card 317 may be visible but cannot be taken out of the receiver 316 of the housing 335. In this operating position, the electrical connections are of course provided between the two contacting devices 339 and 341 and the chip card 317 and the antenna 315 respectively.

A third position can be seen in Figs. 4C and 5A, in which position the housing 335 is taken entirely out of the plug-in card enclosure 311 so that the insertion, removal and/or replacement of a chip card 317 may be effected. It is to be understood that this chip-card handling position of the housing 335 may also be of such a kind that a mechanical connection is still provided between the housing 335 and the plug-in card enclosure 311. It is to be understood that the chip card 317 may also be inserted into the housing 335 in any other manner, thus from the other plane side, or from a longitudinal side or a transverse side.

## Claims

1. A plug-in card (310) for electronic devices having an approximately oblong rectangular form, comprising an enclosure (311), and a printed circuit board (312) accommodated in the enclosure, the printed circuit board including a contacting device (339) on which a chip card (317), such as a SIM card, is electrically and mechanically held, and having a receiver (316) for the chip card (317), the plug-in card (310) including an antenna (315) on one side, preferably a narrow side (319), of the plug-in card, **characterised in that** the antenna (315) is arranged on or in a housing (335) which also includes the receiver (316) for the chip card (317)and which antenna can be brought by way of this housing (335) out of a safekeeping position substantially within the enclosure (311) into an operating position arranged substantially outside of the enclosure on that side.

2. A plug-in card according to Claim 1, **characterised in that** the receiver (316) includes a pocket for receiving the chip-card (317).

3. A plug-in card according to Claims 1 or 2, **characterised in that** the chip-card receiver (316) precedes the antenna (315) in the direction of insertion (E) of the housing (335).

4. A plug-in card according to any of Claims 1 to 3, **characterised in that** the chip-card contacting device (339) is arranged fixed on the printed circuit board (312) in such a way that the chip card (317) in the housing (335) is out of contact with the contacting device (339) in the safekeeping position with the housing pushed into the plug-in card (310).

5. A plug-in card according to any of Claims 1 to 4 **characterised in that** an antenna contacting device (341) is provided on the printed circuit board (312) and is arranged in such a way that the antenna (315) in the housing (335) is out of contact with the contacting device (340) in the safekeeping position with the housing pushed into the plug-in card (310).

6. A plug-in card according to any of Claims 1 to 5, **characterised in that** the housing (335) can be locked under spring bias in its safekeeping position in the plug-in card enclosure (311).

## Patentansprüche

1. Steckkarte (310) für elektronische Geräte, in etwa länglich rechteckiger flacher Form, mit einem Gehäuse (311), mit einer im Gehäuse aufgenommenen Leiterplatte (312), auf der eine Kontaktiereinrichtung (339) für eine Chipkarte (317), wie bspw. eine SIM-Karte, elektrisch und mechanisch gehalten ist, und mit einer Aufnahme (316) für die Chipkarte (317), wobei die Steckkarte (310) mit einer Antenne (315) an einer Seite, vorzugsweise einer Schmalseite (319) der Steckkarte bestückt ist, **dadurch gekennzeichnet, dass** die Antenne (315) an oder in einem Trägergehäuse (335) angeordnet ist, das gleichzeitig die Aufnahme (316) für die Chipkarte (317) trägt und welche Antenne mittels des Trägergehäuses (335) aus einer im Gehäuse (311) parallel zur Steckkartenoberfläche angeordneten Aufbewahrstellung in eine an dieser Seite im Wesentlichen außerhalb des Gehäuses angeordneten Betriebsstellung bringbar ist.

2. Steckkarte nach Anspruch 1, **dadurch gekennzeichnet, dass** die Chipkarte (317) in die Aufnahme (316) in Form einer Tasche legbar ist.

3. Steckkarte nach Anspruch 1 oder 2, **dadurch gekennzeichnet, dass** die Chipkartenaufnahme (316) in Einschubrichtung (E) des Trägergehäuses (335) vor der Antenne (315) vorgesehen ist.

4. Steckkarte nach mindestens einem der Ansprüche 1 bis 3, **dadurch gekennzeichnet, dass** die Chipkarten-Kontaktiervorrichtung (339) auf der Leiterplatte (312) ortsfest derart angeordnet ist, dass die Chipkarte (317) im Trägergehäuse (335) in dessen in die Steckkarte (310) einschobener Aufbewahrstellung mit der Kontaktiervorrichtung (339) außer Kontakt ist.

5. Steckkarte nach mindestens einem der Ansprüche 1 bis 4, **dadurch gekennzeichnet, dass** eine auf der Leiterplatte (312) vorgesehene Antennen-Kontaktiervorrichtung (341) derart angeordnet ist, dass die Antenne (315) im Trägergehäuse (335) in dessen in die Steckkarte (310) eingeschobener Aufbewahrstellung mit der Kontaktiervorrichtung (341) außer Kontakt ist.

6. Steckkarte nach mindestens einem der Ansprüche 1 bis 5, **dadurch gekennzeichnet, dass** das Trägergehäuse (335) in seiner Aufbewahrstellung im Steckkartengehäuse (311) federbelastet verriegelbar ist.

## Revendications

1. Carte enfichable (310) pour des dispositifs électroniques, ayant une forme rectangulaire approximativement oblongue, comprenant un boîtier (311) et une carte à circuits imprimés (312) logée dans le boîtier, la carte à circuits imprimés incluant un dispositif de mise en contact (339) sur lequel une carte à puce (317), comme une carte SIM, est tenue électriquement et mécaniquement, et comportant un récepteur (316) pour la carte à puce (317), la carte enfichable (310) incluant une antenne (315) sur un côté, de préférence un petit côté (319), de la carte enfichable, **caractérisée en ce que** l'antenne (315) est agencée sur ou dans un casier (335) qui inclut aussi le récepteur (316) pour la carte à puce (317), et ladite antenne peut être amenée à l'aide de ce casier (335) hors d'une position de rangement sensiblement à l'intérieur du boîtier (311) jusque dans une position fonctionnelle agencée sensiblement à l'extérieur du boîtier sur ce côté.

2. Carte enfichable selon la revendication 1, **caractérisée en ce que** le récepteur (316) inclut une poche pour recevoir la carte à puce (317).

3. Carte enfichable selon l'une ou l'autre des revendications 1 et 2, **caractérisée en ce que** le récepteur (316) pour la carte à puce précède l'antenne (315) dans la direction d'insertion (E) du casier (335).

4. Carte enfichable selon l'une quelconque des revendications 1 à 3, **caractérisée en ce que** le dispositif de mise en contact (339) pour la carte à puce est agencé de manière fixe sur la carte à circuits imprimés (312) d'une manière telle que la carte à puce (317) dans le casier (335) est hors de contact avec le dispositif de mise en contact (339) dans la position de rangement avec le casier poussé dans la carte enfichable (310).

5. Carte enfichable selon l'une quelconque des revendications 1 à 4, **caractérisée en ce qu'**un dispositif de mise en contact (341) pour l'antenne est prévu sur la carte à circuits imprimés (312) et est agencé d'une manière telle que l'antenne (315) dans le boîtier (335) est hors de contact avec le dispositif de mise en contact (340) dans la position de rangement avec le casier poussé dans la carte enfichable (310).

6. Carte enfichable selon l'une quelconque des revendications 1 à 5, **caractérisée en ce que** le boîtier (335) peut être verrouillé sous la sollicitation d'un ressort dans sa position de rangement dans le boîtier (311) de la carte enfichable.
